(19) Europäisches Patentamt
European Patent Office
Office européen des brevets

(11) **EP 4 685 698 A1**

(12) **EUROPEAN PATENT APPLICATION**
published in accordance with Art. 153(4) EPC

(43) Date of publication:
**28.01.2026 Bulletin 2026/05**

(21) Application number: **23935368.3**

(22) Date of filing: **28.04.2023**

(51) International Patent Classification (IPC):
*G06N 3/0455* (2023.01)

(52) Cooperative Patent Classification (CPC):
**G06N 3/0455**

(86) International application number:
**PCT/JP2023/016817**

(87) International publication number:
**WO 2024/224590 (31.10.2024 Gazette 2024/44)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **MITSUBISHI ELECTRIC
CORPORATION**
**Chiyoda-ku**
**Tokyo 100-8310 (JP)**

(72) Inventor: **UCHIDE Hayato**
**Tokyo 100-8310 (JP)**

(74) Representative: **Pfenning, Meinig & Partner mbB
Patent- und Rechtsanwälte
Theresienhöhe 11a
80339 München (DE)**

(54) **LEARNING DEVICE, LEARNING METHOD, LEARNING PROGRAM, INFERENCE DEVICE,
INFERENCE METHOD, AND INFERENCE PROGRAM**

(57)     A learning device (11) includes an encoder (11e) including N encoder layers and a decoder (11d) including M decoder layers. The encoder (11e) includes a first path (22e) to add a first output as an output of a first encoder layer (11e_n, $1 \leq n \leq N - 2$) among the N encoder layers (11e_1, ..., 11e_N) to a first auxiliary residual connection (21e) as a residual connection of a second encoder layer (11e_n+$\alpha$, $\alpha \geq 2$) that is two or more layers lower than the first encoder layer (11e_n). The decoder (11d) includes a second path (22d) to add a second output as an output of a first decoder layer (11d_m, $1 \leq m \leq M - 2$) among the M decoder layers (11d_1, ..., 11d_M) to a second auxiliary residual connection (21d) as a residual connection of a second decoder layer (11d_n+$\beta$, $\beta \geq 2$) that is two or more layers lower than the first decoder layer (11d_m).

FIG. 12

## Description

### TECHNICAL FIELD

The present disclosure relates to a learning device, a learning method, a learning program, an inference device, an inference method and an inference program.

### BACKGROUND ART

In a Sequence-to-Sequence task commencing with machine translation by use of machine learning technology, a neural network model (hereinafter referred to also as an "encoder-decoder model") made up of an encoder and a decoder is used. The encoder-decoder model is capable of greatly increasing the accuracy of the machine translation by introducing an attention mechanism (also referred to simply as an "attention"). In the machine translation, the attention mechanism is a scheme that determines information on what words in a target language sentence should be used by the decoder.

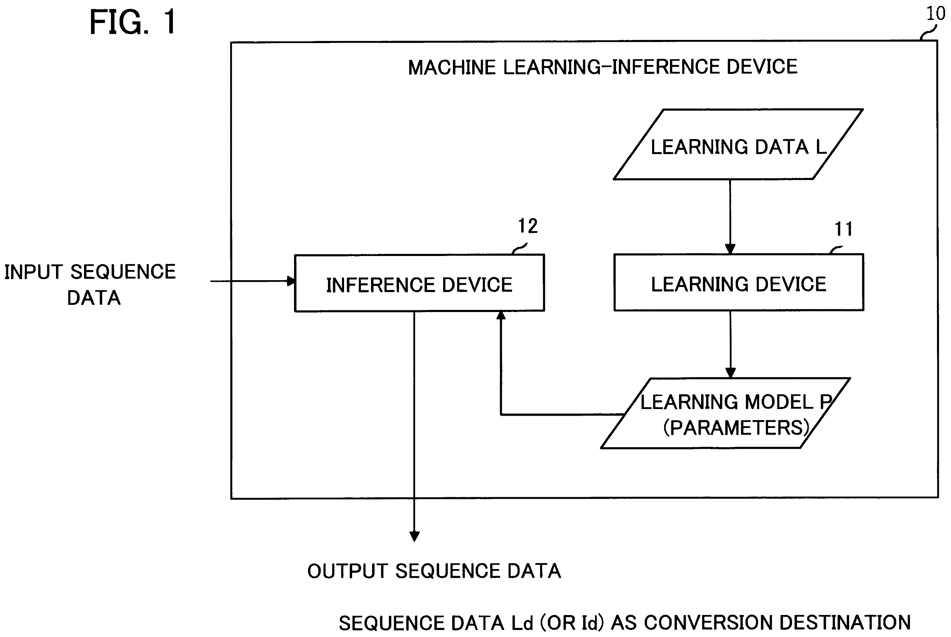

Non-patent Reference 1 describes a transformer as an encoder-decoder model formed by parallelly arranging encoder-decoders each formed by combining an attention mechanism and a fully connected layer. As shown in the Non-patent Reference 1 (see Fig. 1, for example), the transformer is a model that forms an encoder-decoder by stacking up combinations of a multi-head attention (or a masked multi-head attention) and a fully connected layer. In the following description, "a combination of a multi-head attention (or a masked multi-head attention and a fully connected layer" is regarded as one layer, and this layer is referred to as a "transformer layer".

Patent Reference 1 proposes an idea of a translation device capable of stably executing the learning even when the learning rate is high or the batch size is small without deteriorating the translation accuracy. Specifically, the Patent Reference 1 proposes a model in which at least one multi-head attention mechanism among multi-head attention mechanisms in the transformer is replaced with a multi-hop attention mechanism that further applies a predetermined attention mechanism to the output of a scaled dot-product attention mechanism included in the multi-head attention mechanism.

### PRIOR ART REFERENCE

### NON-PATENT REFERENCE

Non-patent Reference 1: Ashish Vaswani and seven others, "Attention Is All You Need", Proceedings of the NIPS 2017, pp.5998-6008, 2017.

### PATENT REFERENCE

Patent Reference 1: Japanese Patent Application Publication No. 2022-18928.

### SUMMARY OF THE INVENTION

### PROBLEM TO BE SOLVED BY THE INVENTION

However, in the above-described technologies, there are cases where the number of parameters of the encoder-decoder model increases. In other words, it has been impossible to increase the learning stability without increasing the number of parameters of the encoder-decoder model as the neural network model.

An object of the present disclosure is to increase the learning stability without increasing the number of parameters of the neural network model.

### MEANS FOR SOLVING THE PROBLEM

A learning device in the present disclosure includes a data acquisition unit to acquire learning data including sequence data as a conversion source and sequence data as a conversion destination and a model generation unit to generate a learning model, for inferring the sequence data as the conversion destination from the sequence data as the conversion source, by using the learning data. The model generation unit includes an encoder including a stack of N encoder layers, where N is an integer greater than or equal to three, to which the sequence data as the conversion source is inputted and a decoder including a stack of M decoder layers, where M is an integer greater than or equal to three, to which the sequence data as the conversion destination and an output of the encoder are inputted. Each of the N encoder layers is formed of a neural network including an attention mechanism and a residual connection. Each of the M decoder layers is formed of a different neural network including an attention mechanism and a residual connection. The encoder includes a first path to add a first output as an output of a first encoder layer among the N encoder layers to a first auxiliary residual connection as the residual connection of a second encoder layer that is two or more layers lower than the first encoder layer. The decoder includes a second path to add a second output as an output of a first decoder layer among the M decoder layers to a second auxiliary residual connection as the residual connection of a second decoder layer that is two or more layers lower than the first decoder layer.

An inference device in the present disclosure includes a data acquisition unit to acquire sequence data as a conversion source and an inference unit to output sequence data as a conversion destination based on the sequence data as the conversion source acquired from the data acquisition unit by using a learning model for inferring the sequence data as the conversion destination from the sequence data as the conversion source. The inference unit includes an encoder including a stack of N encoder layers, where N is an integer greater than or equal to three, to which the sequence data as the conversion source is inputted and a decoder including a stack of M decoder layers, where M is an integer greater than or equal to three, to which the sequence data as the conversion destination and an output of the encoder are inputted. Each of the N encoder layers is formed of a neural network including an attention mechanism and a residual connection. Each of the M decoder layers is formed of a neural network including an attention mechanism and a residual connection. The encoder includes a first path to add a first output as an output of a first encoder layer among the N encoder layers to a first auxiliary residual connection as the residual connection of a second encoder layer that is two or more layers lower than the first encoder layer. The decoder includes a second path to add a second output as an output of a first decoder layer among the M decoder layers to a second auxiliary residual connection as the residual connection of a second decoder layer that is two or more layers lower than the first decoder layer.

**EFFECT OF THE INVENTION**

According to the present disclosure, the learning stability can be increased without increasing the number of parameters of the neural network model.

**BRIEF DESCRIPTION OF THE DRAWINGS**

Fig. 1 is a block diagram showing the configuration of a machine learning-inference device.
Fig. 2 is a block diagram showing the configuration of a learning device according to first to third embodiments.
Fig. 3 is a block diagram showing the configuration of an inference device according to the first to third embodiments.
Fig. 4 is a flowchart showing the operation of the learning device according to the first to third embodiments.
Fig. 5 is a flowchart showing the operation of the inference device according to the first to third embodiments.
Fig. 6 is a diagram showing an example of the hardware configuration of the machine learning-inference device in Fig. 1.
Fig. 7 is a block diagram showing the configuration of an encoder-decoder model as a model generation unit in Fig. 2.
Fig. 8 is a block diagram showing the configuration of an encoder-decoder model as an inference unit in Fig. 3.
Fig. 9 is a block diagram showing the configuration of an encoder-decoder model as a model generation unit of a learning device or an inference unit of an inference device in a comparative example.
Fig. 10 is a diagram showing the configuration of an encoder of the encoder-decoder model in Fig. 9.
Fig. 11 is a diagram showing the configuration of a decoder of the encoder-decoder model in Fig. 9.
Fig. 12 is a diagram showing the configuration of the encoder of the encoder-decoder model of the learning device or the inference device according to the first embodiment.
Fig. 13 is a diagram showing the configuration of the decoder of the encoder-decoder model of the learning device or the inference device according to the first embodiment.
Fig. 14 is a diagram showing the configuration of the encoder of the encoder-decoder model of the learning device or the inference device according to a second embodiment.
Fig. 15 is a diagram showing the configuration of the decoder of the encoder-decoder model of the learning device or the inference device according to the second embodiment.
Fig. 16 is a diagram showing the configuration of the encoder of the encoder-decoder model of the learning device or the inference device according to a third embodiment.
Fig. 17 is a diagram showing the configuration of the decoder of the encoder-decoder model of the learning device or the inference device according to the third embodiment.

**MODE FOR CARRYING OUT THE INVENTION**

A learning device, a learning method, a learning program, an inference device, an inference method and an inference program according to each embodiment will be described below with reference to the drawings. The following embodiments are just examples and it is possible to appropriately combine embodiments and appropriately modify each embodiment.

(1) Learning Device and Inference Device

Fig. 1 is a block diagram showing the configuration of a machine learning-inference device 10. As shown in Fig. 1, the machine learning-inference device 10 according to each embodiment includes a machine learning device (also referred to simply as a "learning device") 11 that learns and outputs a machine learning model (also referred to simply as a "learning model") P (i.e., parameters of the learning model P) by using learning data L as an input and an inference device 12 that makes an inference by using the learning model P (i.e., the parameters of the learning model P) outputted from the learning device 11. The machine learning-inference device 10 is a computer, for example. Further, the learning device 11 and the inference device 12 can be devices different from each other.

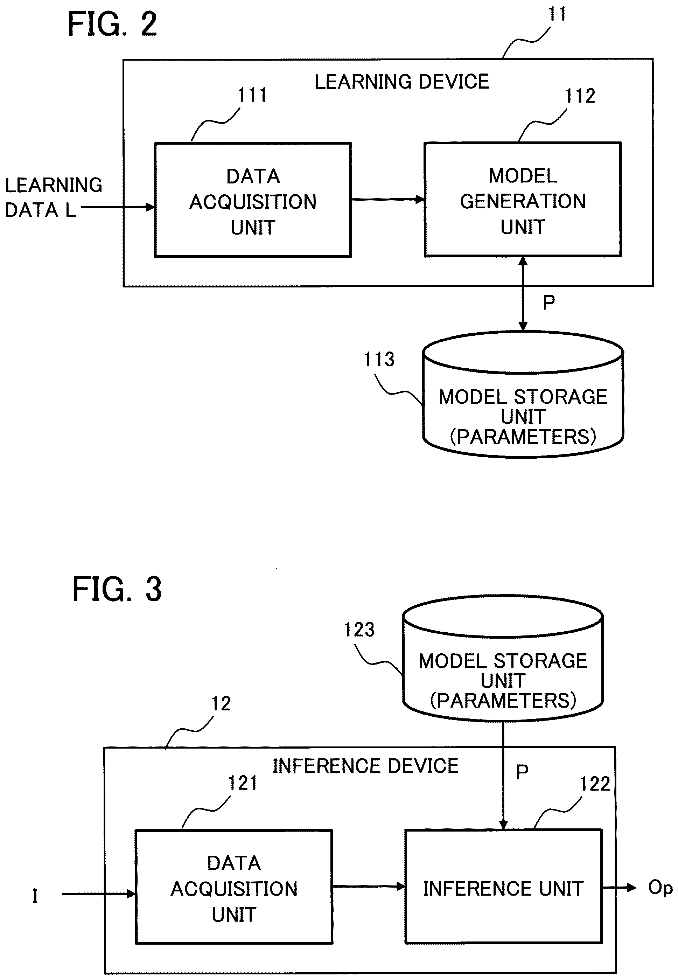

Fig. 2 is a block diagram showing the configuration of the learning device 11 according to first to third embodiments. The learning device 11 is a device capable of executing learning methods according to the first to third embodiments. The learning device 11 is, for example, a computer capable of executing learning programs according to the first to third embodiments. The learning device 11 includes a data acquisition unit 111 that acquires the learning data L including sequence data Le as a conversion source and sequence data Ld as a conversion destination, a model generation unit 112 that generates the learning model P, for inferring the sequence data Ld as the conversion destination from the sequence data Le as the conversion source, by using the learning data L, and a storage device 113 that stores the learning model P generated by the model generation unit 112. The storage device 113 does not necessary have to be a part of the learning device 11 but can be a part of a device (e.g., server on a network) capable of communicating with the learning device 11.

Fig. 3 is a block diagram showing the configuration of the inference device 12 according to the first to third embodiments. The inference device 12 is a device capable of executing inference methods according to the first to third embodiments. The inference device 12 is, for example, a computer capable of executing inference programs according to the first to third embodiments. The inference device 12 includes a data acquisition unit 121 that acquires sequence data Ie as the conversion source, an inference unit 122 that outputs sequence data Id as the conversion destination based on the sequence data Ie as the conversion source acquired from the data acquisition unit 121 by using the learning model P for inferring the sequence data Id as the conversion destination from the sequence data Ie as the conversion source, and a storage device 123 that stores the learning model P. The storage device 123 does not necessary have to be a part of the inference device 12 but can be a part of a device (e.g., server on a network) capable of communicating with the inference device 12.

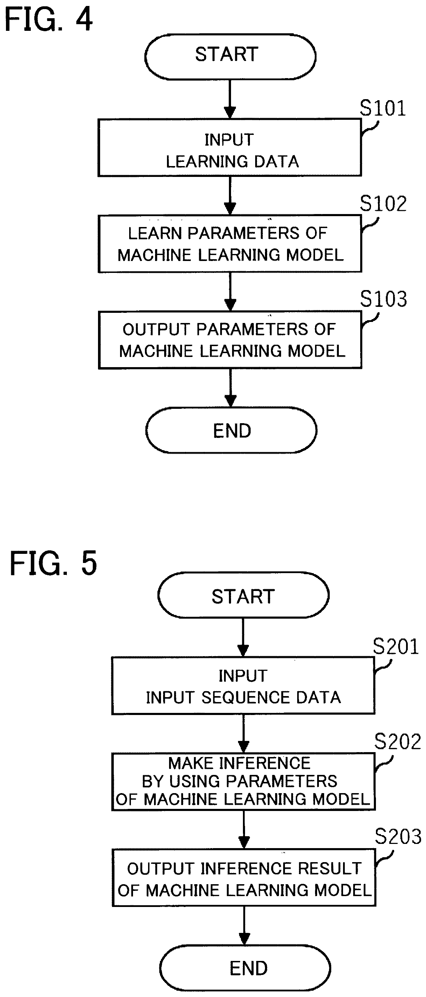

Fig. 4 is a flowchart showing the operation of the learning device 11 according to the first to third embodiments. In step S101, the learning device 11 first acquires the learning data L as an input.

In the next step S102, the learning device 11 learns the parameters of the learning model P by using the learning data L inputted in the step S101. Incidentally, as an optimization method used for the learning of the parameters, any optimization method can be used. For example, optimization algorithm such as Adam can be used for the learning of the parameters.

In the next step S103, the learning device 11 outputs the parameters of the machine learning model P learned in the step S102 to a predetermined output destination (e.g., a storage device, a display, another device connected via a communication network, or the like). By this process, the parameters of the learning model P are learned and outputted.

Here, the learning data L is data for machine translation, for example. In cases where the input sequence is a sequence of words, such as a sentence or a phrase, in the translation source language, the output sequence is a result of conversion from the translation source language to the translation destination language, namely, a sequence of words in the translation destination language indicating the same meaning as the sequence of words in the translation source language.

The learning data L can also be data for natural language processing, for example. For example, in cases where the input sequence is a sequence of words, such as a sentence or a phrase, in a particular language, the output sequence is a result of summation in the particular language, namely, a sequence formed with a smaller number of words than the input sequence but holding an essential meaning of the input sequence.

The learning data L can also be data for natural language processing, for example. For example, in cases where the input sequence is a sequence of words that means a question, the output sequence is a sequence of words that means an answer to the question.

The learning data L can also be data for speech recognition, for example. For example, in cases where the input sequence is a sequence of audio data indicating a human's oral speech, the output sequence is a sequence of phonemes, feature values or words that indicates the contents of the speech.

The learning data L can also be data for image processing, for example. For example, in cases where the input sequence is an image, namely, a sequence of colors included in the image, lightnesses, or the like, the output sequence is a sequence of text that explains the image.

The learning data L can also be data for abnormality detection, for example. For example, in cases where the input sequence is a sequence of data obtained by a particular sensor, the output sequence is a sequence of text that indicates normality or abnormality.

The learning data L can also be data for abnormality prediction, for example. For example, in cases where the input sequence is a sequence of data obtained by a particular sensor, the output sequence is a sequence of text that indicates a possibility of occurrence of abnormality in the future.

The learning data L can also be data for demand forecasting, for example. For example, in cases where the input sequence is a sequence of data regarding the number of sales of a product in an arbitrary period, the output sequence is a sequence of text that indicates the demand for the product in the future.

Fig. 5 is a flowchart showing the operation of the inference device 12 according to the first to third embodiments. In step S201, the inference device 12 first acquires input sequence data I as an input.

In the next step S202, the inference device 12 converts the input sequence data I inputted in the step S201 to output data Op by using the parameters of the already-learned learning model P.

In the next step S203, the inference device 12 outputs the output result obtained in the step S202 to a predetermined output destination (e.g., a storage device, a display, another device connected via a communication network, or the like). By this process, the input sequence data I is converted by the already-learned learning model P to the output data Op and outputted.

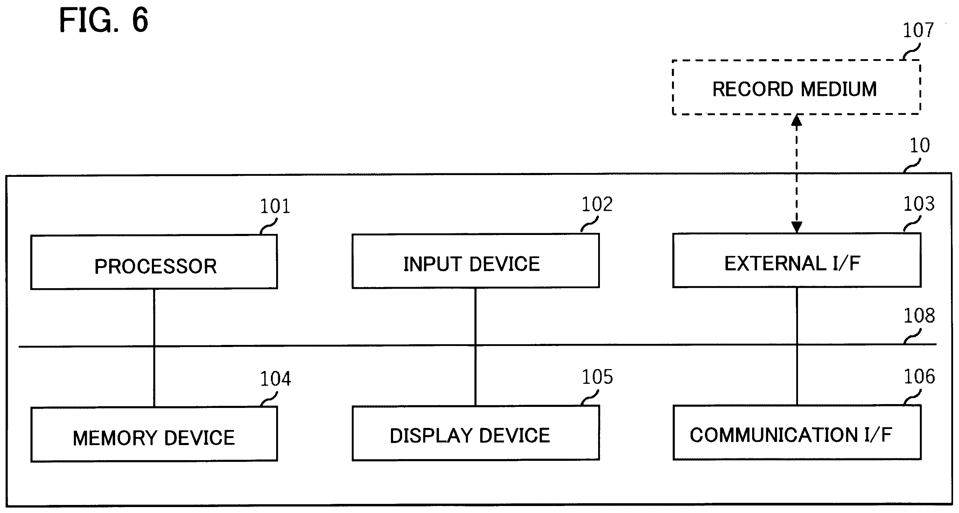

Fig. 6 is a diagram showing an example of the hardware configuration of the machine learning-inference device 10. The machine learning-inference device 10 according to the embodiment includes an input device 102, a display device 105, an external I/F 103, a communication I/F 106, a processor 101 and a memory device 104. These hardware components are communicatively connected to each other via a bus 108. The hardware configuration of the learning device 11 shown in Fig. 2 is the same as the configuration in Fig. 6. Further, the hardware configuration of the inference device 12 shown in Fig. 3 is the same as the configuration in Fig. 6.

The input device 102 is a keyboard, a mouse, a touch panel or the like, for example. The display device 105 is a display or the like, for example.

The external I/F 103 is an interface with an external device including a record medium. The machine learning-inference device 10 is capable of executing processes such as reading and writing from/to the record medium via the external I/F 103. The record medium 107 may store, for example, one or more programs implementing functional units included in the machine learning-inference device 10. Further, the record medium 107 may store the learning data, the parameters of the learning model, and so forth. Incidentally, the record medium 107 can be a CD (Compact Disc), a DVD (Digital Versatile Disk), an SD memory card (Secure Digital memory card), a USB (Universal Serial Bus) memory card, or the like, for example.

The communication I/F 106 is an interface for connecting the machine learning-inference device 10 to a communication network. Incidentally, the one or more programs implementing functional units included in the machine learning-inference device 10 may also be acquired (downloaded) from a predetermined server device or the like via the communication I/F 106. Further, the learning data, the parameters of the already-learned machine learning model, and so forth may also be acquired (downloaded) from a predetermined server device or the like via the communication I/F 106.

The processor 101 can be a variety of arithmetic device such as a CPU (Central Processing Unit) or a GPU (Graphics Processing Unit). Functional units included in the machine learning-inference device 10 are implemented by, for example, processes that one or more programs stored in the memory device 104 cause the processor to execute.

The memory device 104 can be a variety of storage device such as an HDD (Hard Disk Drive), an SSD (Solid State Drive), a RAM (Random Access Memory), a ROM (Read Only Memory) or a flash memory, for example. The learning data, the parameters of the machine learning model, and so forth are stored in the memory device 104, for example.

Incidentally, the hardware configuration shown in Fig. 6 is just an example; the machine learning-inference device 10, the learning device 11 and the inference device 13 may have a different hardware configuration.

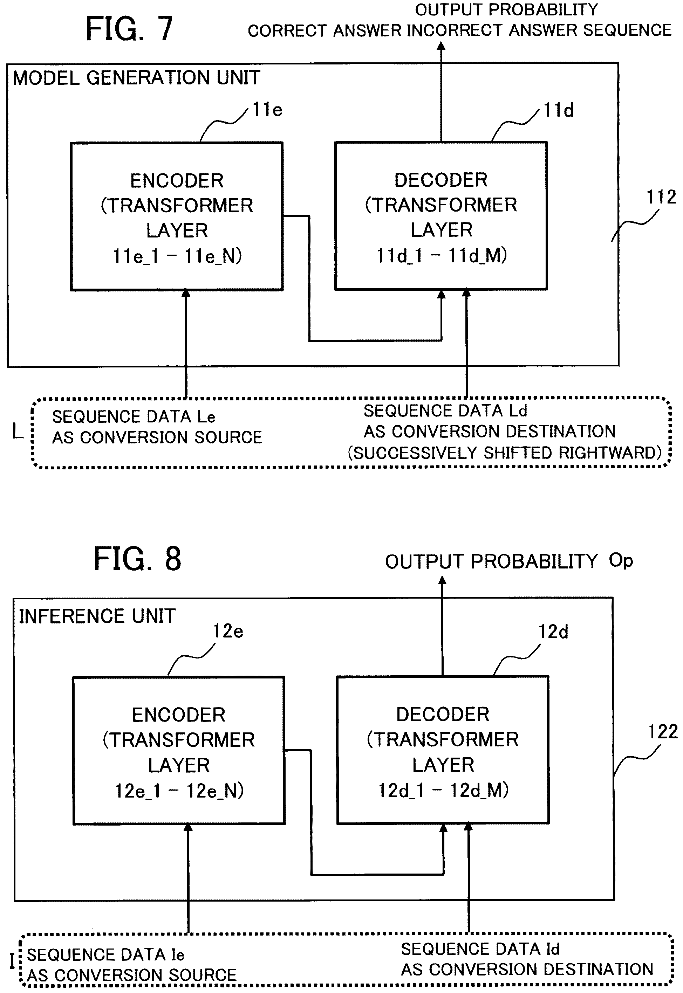

Fig. 7 is a block diagram showing the configuration of an encoder-decoder model as the model generation unit 112 of the learning device 11 in Fig. 2. The model generation unit 112 is a transformer, for example. The model generation unit 112 includes an encoder 11e and a decoder 11d. The encoder 11e includes a plurality of transformer layers (i.e., a plurality of encoder layers) 11e_1, ..., 11e_N. N is an integer greater than or equal to three. The decoder 11d includes a plurality of transformer layers (i.e., a plurality of decoder layers) 11d_1, ..., 11d_M. M is an integer greater than or equal to three. Further, it is permissible even if N = M.

Fig. 8 is a block diagram showing the configuration of an encoder-decoder model as the inference unit 122 of the inference device 12 in Fig. 3. The inference unit 122 is a transformer, for example. The inference unit 122 includes an encoder 12e and a decoder 12d. The encoder 12e includes a plurality of transformer layers (i.e., a plurality of encoder layers) 12e_1, ..., 12e_N. N is an integer greater than or equal to three. The decoder 12d includes a plurality of transformer layers (i.e., a plurality of decoder layers) 12d_1, ..., 12d_M. M is an integer greater than or equal to three. Further, it is permissible even if N = M.

(2) Comparative Example

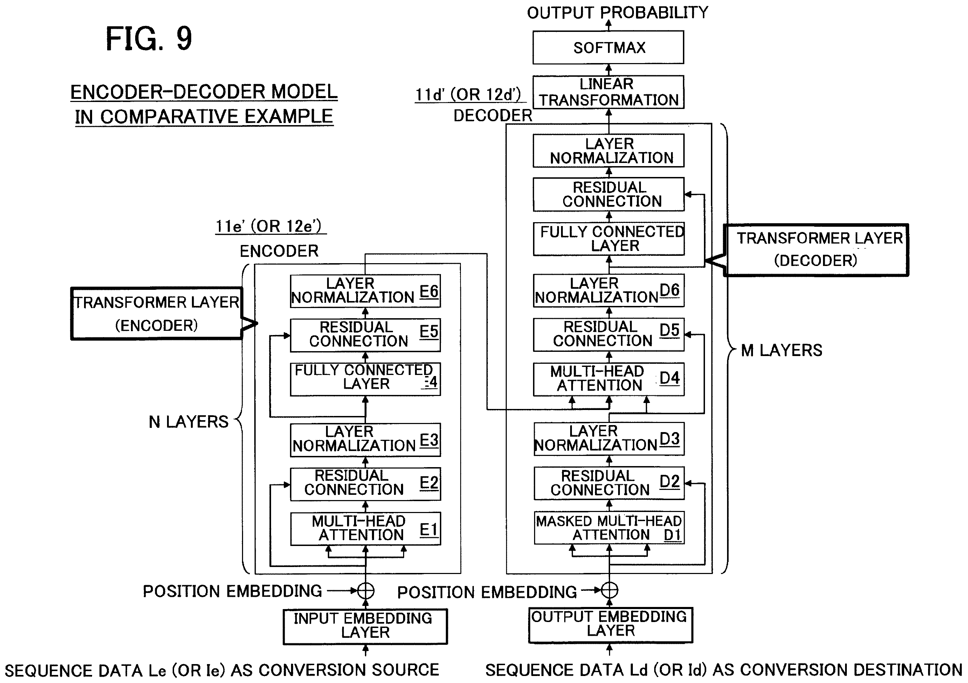

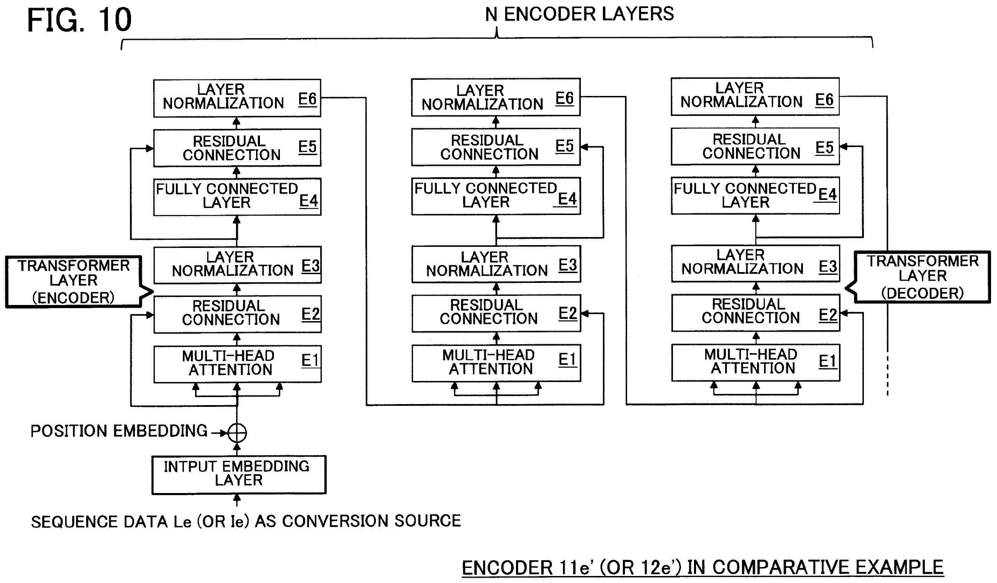

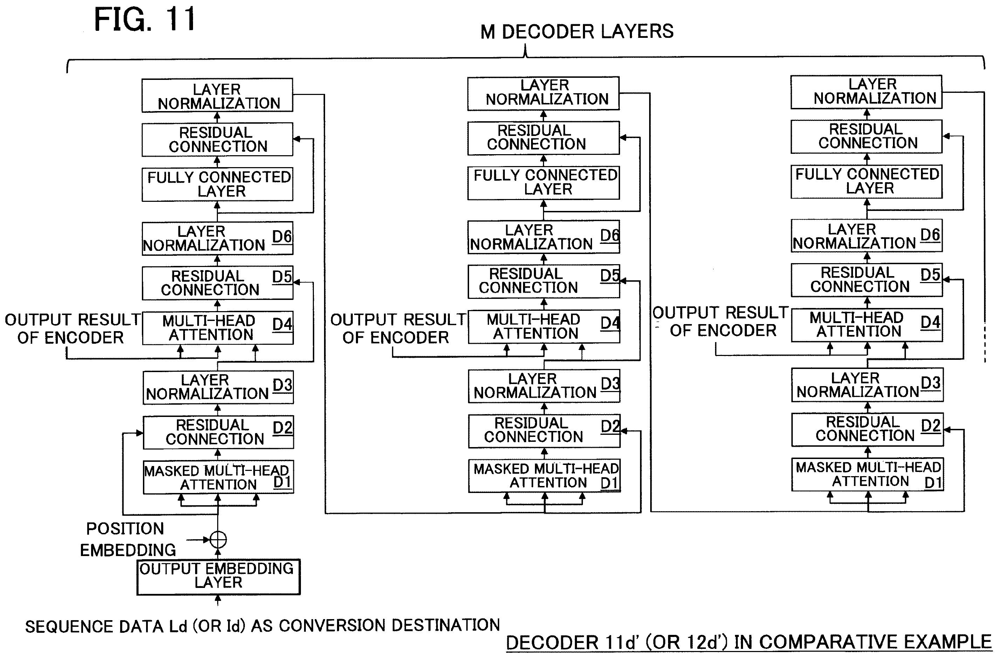

Fig. 9 is a block diagram showing the configuration of an encoder-decoder model as a model generation unit of a learning device or an inference unit of an inference device in a comparative example. Fig. 10 is a diagram showing the configuration of an encoder in the comparative example as an encoder of the encoder-decoder model in Fig. 9. Fig. 11 is a diagram showing the configuration of a decoder in the comparative example as a decoder of the encoder-decoder model in Fig. 9.

The encoder-decoder model is a neural network model made up of an encoder 11e' (or 12e') and a decoder 11d' (or 12d'). In the encoder 11e' (or 12e'), an input text as the input sequence undergoes compression processing in an input embedding layer, undergoes addition of an input position (e.g., where each word is situated in a sentence) in a position embedding layer (position encoding layer), and is inputted to a main part of the encoder.

The encoder 11e' (or 12e') is of a stack type and is formed with a plurality of blocks. In the encoder 11e' (or 12e'), a multi-head attention (E1) as a multi-head attention mechanism is applied, a vector of a residual connection (E2) (i.e., sequence data as the conversion source) and an output vector of the multi-head attention (E1) are added together, and layer normalization (E3) is executed. Subsequently, full connection in regard to each position is applied in a fully connected layer (E4), a vector of a residual connection (E5) (i.e., output vector of the layer normalization (E3)) and an output vector of the fully connected layer (E4) are added together, and layer normalization (E6) is executed.

The decoder 11d' (or 12d') is of a stack type and is formed with a plurality of blocks. In the decoder, a masked multi-head attention (D1) is applied so that inputs in the future are not taken into consideration. A vector of a residual connection (D2) (i.e., sequence data as the conversion source) and an output vector of the masked multi-head attention are added together, and layer normalization (D3) is executed. Subsequently, the output of the encoder 11e' (or 12e') is used in a multi-head attention (D4), a vector of a residual connection (D5) (i.e., output vector of the layer normalization (D3)) and an output vector of the multi-head attention (D4) are added together, and layer normalization (D6) is executed. Details of the encoder-decoder model are described in the Non-patent Reference 1 and the Patent Reference 1.

(3) First Embodiment

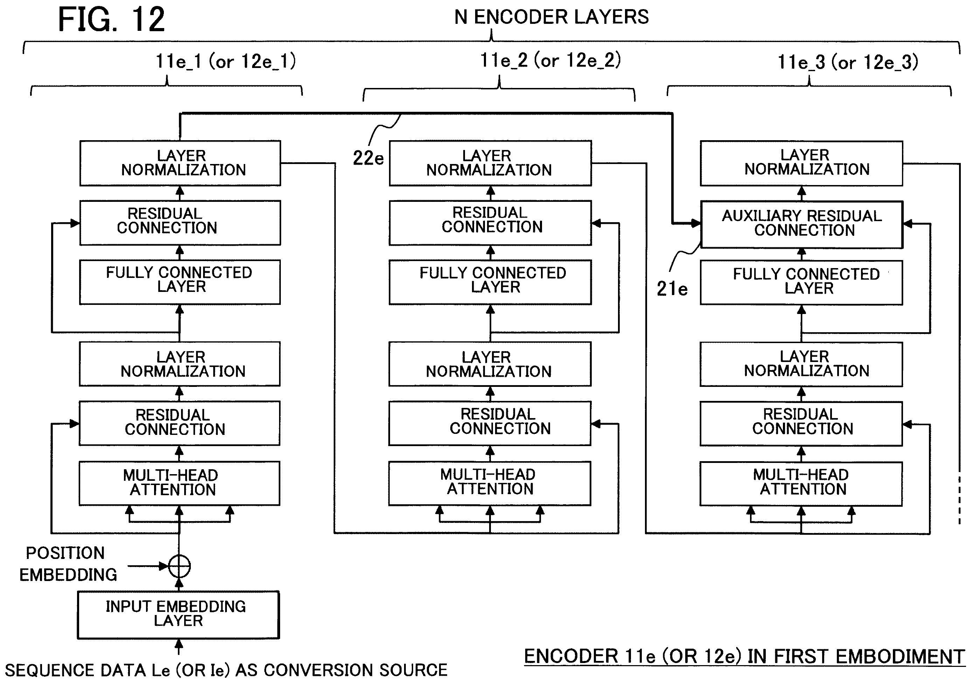

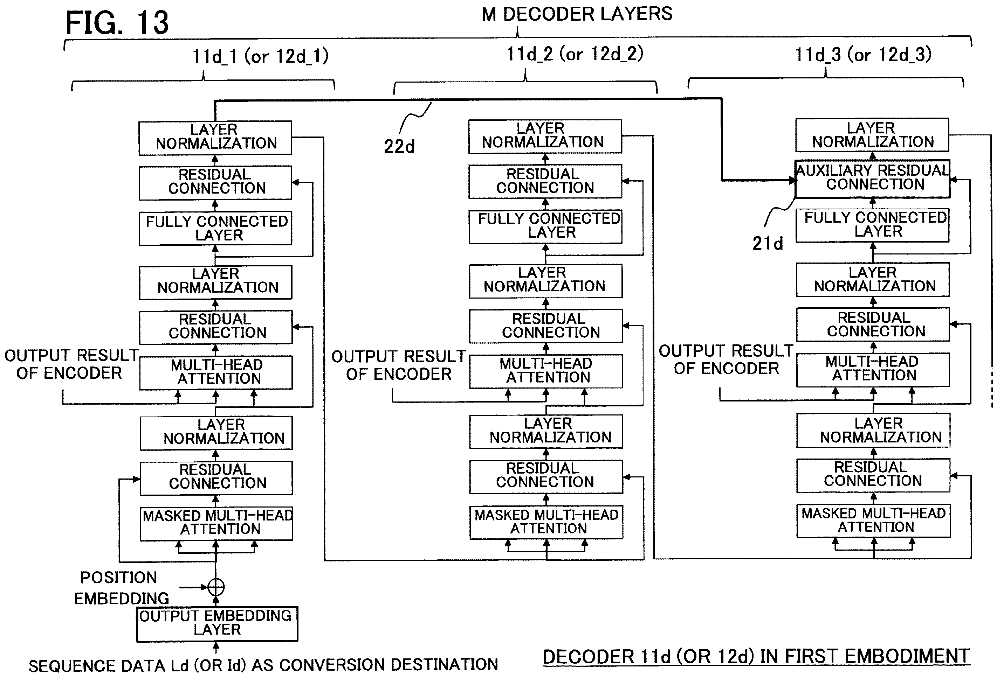

Fig. 12 is a diagram showing the configuration of the encoder 11e or 12e of the encoder-decoder model of the learning device 11 or the inference device 12 according to the first embodiment. Fig. 13 is a diagram showing the configuration of the decoder 11d or 12d of the encoder-decoder model of the learning device 11 or the inference device 12 according to the first embodiment.

The multi-head attention, the residual connection, the layer normalization, the fully connected layer, the residual connection and the layer normalization in Fig. 12 are the same as the multi-head attention (E1), the residual connection (E2), the layer normalization (E3), the fully connected layer (E4), the residual connection (E5) and the layer normalization (E6) in Fig. 9 and Fig. 10. The masked multi-head attention, the residual connection, the layer normalization, the multi-head attention, the residual connection and the layer normalization in Fig. 13 are the same as the masked multi-head attention (D1), the residual connection (D2), the layer normalization (D3), the multi-head attention (D4), the residual connection (D5) and the layer normalization (D6) in Fig. 9 and Fig. 11.

<Learning Device>

The model generation unit 112 (Fig. 7) of the learning device 11 according to the first embodiment generates the learning model P, for inferring the sequence data Ld as the conversion destination (output sequence data) from the sequence data Le as the conversion source (input sequence data), by using the learning data L.

The model generation unit 112 (Fig. 7) includes the encoder (i.e., transformer layers) 11e (Fig. 12) including a stack of N encoder layers 11e_1, ..., 11e_N, where N is an integer greater than or equal to three, to which the sequence data Le as the conversion source is inputted and the decoder (i.e., transformer layers) 11d (Fig. 13) including a stack of M decoder layers 11d_1, ..., 11d_M, where M is an integer greater than or equal to three, to which the sequence data Ld as the conversion destination and the output of the encoder 11e are inputted.

As shown in Fig. 12, each of the N encoder layers 11e_1, ..., 11e_N is formed of a neural network including an attention mechanism and residual connections. As shown in Fig. 13, each of the M decoder layers 11d_1, ..., 11d_M is formed of a different neural network including attention mechanisms and residual connections.

As shown in Fig. 12, the encoder 11e includes a path (referred to also as a "first path") 22e that adds a first output as the output of a first encoder layer 11e_n (n: integer satisfying $1 \leq n \leq N - 2$) among the N encoder layers 11e_1, ..., 11e_N to an auxiliary residual connection (referred to also as a "first auxiliary residual connection") 21e as the residual connection of a second encoder layer 11e_n+$\alpha$ ($\alpha$: integer satisfying $\alpha \geq 2$) that is two or more layers lower than the encoder layer 11e_n. While n = 1 and $\alpha$ = 2 in Fig. 12, n and $\alpha$ are not limited to these values. In Fig. 12, the auxiliary residual connection 21e adds up the output of the immediately previous fully connected layer, the output of the layer normalization immediately before the fully connected layer, and the output of the layer normalization of the encoder layer 11e_1 that is on the upstream side by two layers, and outputs the sum total.

As shown in Fig. 13, the decoder 11d includes a path (referred to also as a "second path") 22d that adds a second output as the output of a first decoder layer 11d_m (m: integer satisfying $1 \leq m \leq M - 2$) among the M decoder layers 11d_1, ..., 11d_M to an auxiliary residual connection (referred to also as a "second auxiliary residual connection") 21d as the residual connection of a second decoder layer 11d_n+$\beta$ ($\beta$: integer satisfying $\beta \geq 2$) that is two or more layers lower than the decoder layer 11d_m. While m = 1 and $\beta$ = 2 in Fig. 13, m and $\beta$ are not limited to these values. In Fig. 13, the auxiliary residual connection 21d adds up the output of the immediately previous fully connected layer, the output of the layer normalization immediately before the fully connected layer, and the output of the layer normalization of the decoder layer 11d_1 that is on the upstream side by two layers, and outputs the sum total.

<Inference Device>

The inference unit 122 (Fig. 8) outputs the sequence data Id as the conversion destination based on the sequence data Ie as the conversion source acquired from the data acquisition unit 121 (Fig. 8) by using the learning model P for inferring the sequence data Id as the conversion destination from the sequence data Ie as the conversion source.

The inference unit 122 includes the encoder (i.e., transformer layers) 12e including a stack of N encoder layers 12e_1, ..., 12e_N, where N is an integer greater than or equal to three, to which the sequence data Ie as the conversion source is inputted and the decoder (i.e., transformer layers) 12d including a stack of M decoder layers 12d_1, ..., 12d_M, where M is an integer greater than or equal to three, to which the sequence data Id as the conversion destination and the output of the encoder 12e are inputted.

Each of the N encoder layers 12e_1, ..., 12e_N is formed of a neural network including an attention mechanism and residual connections. Each of the M decoder layers 12d_1, ..., 12d_M is formed of a neural network including attention mechanisms and residual connections.

As shown in Fig. 12, the encoder 12e includes a path (referred to also as a "first path") 22e that adds a first output as the output of a first encoder layer 12e_n (n: integer satisfying $1 \leq n \leq N - 2$) among the N encoder layers 12e_1, ..., 12e_N to an auxiliary residual connection (referred to also as a "first auxiliary residual connection") 21e as the residual connection of a second encoder layer 12e_n+$\alpha$ ($\alpha$: integer satisfying $\alpha \geq 2$) that is two or more layers lower than the encoder layer 12e_n. While n = 1 and $\alpha$ = 2 in Fig. 12, n and $\alpha$ are not limited to these values. In Fig. 12, the auxiliary residual connection 21e adds up the output of the immediately previous fully connected layer, the output of the layer normalization immediately before the fully connected layer, and the output of the layer normalization of the encoder layer 12e_1 that is on the upstream side by two layers, and outputs the sum total.

As shown in Fig. 13, the decoder 12d includes a path (referred to also as a "second path") 22d that adds a second output as the output of a first decoder layer 12d_m (m: integer satisfying $1 \leq m \leq M - 2$) among the M decoder layers 12d_1, ..., 12d_M to an auxiliary residual connection (referred to also as a "second auxiliary residual connection") 21d as the residual connection of a second decoder layer 12d_n+$\beta$ ($\beta$: integer satisfying $\beta \geq 2$) that is two or more layers lower than the first decoder layer 12d_m. While m = 1 and $\beta$ = 2 in Fig. 13, m and $\beta$ are not limited to these values. In Fig. 13, the auxiliary residual connection 21d adds up the output of the immediately previous fully connected layer, the output of the layer normalization immediately before the fully connected layer, and the output of the layer normalization of the decoder layer 12d_1 that is on the upstream side by two layers, and outputs the sum total.

<Effect>

In the first embodiment, the path 22e that connects the output of an encoder layers in the encoder 11e to the auxiliary residual connection 21e as the residual connection in an encoder layer that is two or more layers lower is added. This path 22e plays a role in assisting stable parameter update in the transformer layers.

Similarly, in the first embodiment, the path 22d that connects the output of a decoder layer in the decoder 11d to the auxiliary residual connection 21d as the residual connection in a decoder layer that is two or more layers lower is added. This path 22d plays a role in assisting the stable parameter update in the transformer layers.

For example, in the encoder-decoder model (i.e., transformer) in the comparative example shown in Fig. 9 to Fig. 11, a gradient that is calculated at the time of the learning has a tendency to decrease at the time of the layer normalization, and the layer normalization is considered to be the cause of the vanishing gradient. Since the transformer has the structure of repeating the layer normalization as shown in Fig. 9 to Fig. 11, the gradient is necessitated to be decreased repeatedly, and the vanishing gradient is likely to be great due to a lot of transformer layers included in the transformer.

In the encoder-decoder model in the comparative example shown in Fig. 9, by representing each sublayer such as a multi-head attention mechanism or a fully connected layer in a transformer layer as a function F(x), the input to the sublayer as x, and the layer normalization as a function LN, the output after the layer normalization obtained by means of forward calculation is as shown in the following expression (1):

$$LN\big(x + F(x)\big) \qquad (1).$$

Next, the derivative value (i.e., gradient) of the function LN in the expression (1) calculated at the time of the learning is as shown in the following expression (2):

$$\frac{\partial LN\big(x + F(x)\big)}{\partial\big(x + F(x)\big)}\left(I + \frac{\partial F(x)}{\partial x}\right) \qquad (2).$$

As shown in the expression (2), in the transformer layer in the comparative example, the product of the derivative of the function LN and the derivative of the function F(x) representing the sublayer plus the residual connection is obtained. Here, the derivative of the function LN is represented by the following expression (3) and the derivative of (F(x) plus the residual connection) (i.e., the derivative of (x + F(x))) is represented by the following expression (4):

$$\frac{\partial LN\big(x + F(x)\big)}{\partial\big(x + F(x)\big)} \qquad (3),$$

$$\left(I + \frac{\partial F(x)}{\partial x}\right) \qquad (4).$$

When the derivative of the function LN attenuates greatly at the time of the learning, that is considered to lead to a great vanishing gradient since the transformer has the structure of repeating the layer normalization.

In the first embodiment, the output of the (n - 2)-th layer is added to the input to the second layer normalization in the n-th layer. Although the value after undergoing the first layer normalization in the n-th layer is originally the input to the second layer normalization, the output of the (n - 2)-th layer, as a value having not undergone the first layer normalization in the n-th layer, is added to the input to the second layer normalization in the n-th layer, which plays the role of preventing the gradient from changing greatly.

As described above, according to the first embodiment, the learning stability can be increased without increasing the number of parameters of the encoder-decoder model.

(4) Second Embodiment

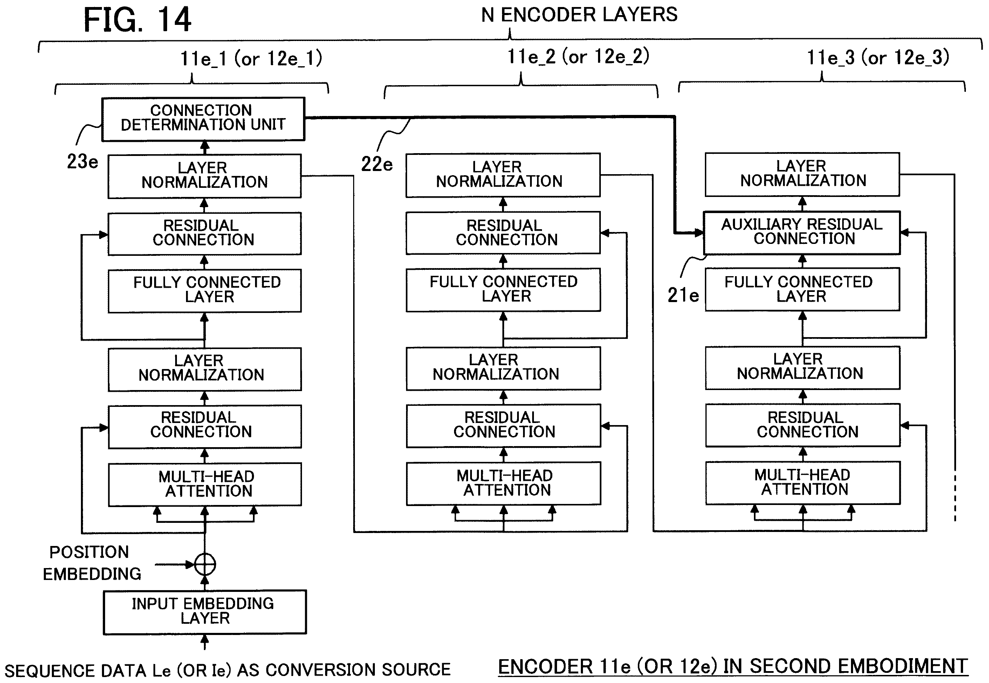

Fig. 14 is a diagram showing the configuration of the encoder 11e or 12e of the encoder-decoder model of the learning device 11 or the inference device 12 according to a second embodiment. The encoder 11e or 12e of the encoder-decoder model of the learning device 11 or the inference device 12 according to the second embodiment differs from that in the first embodiment in including a connection determination unit 23e.

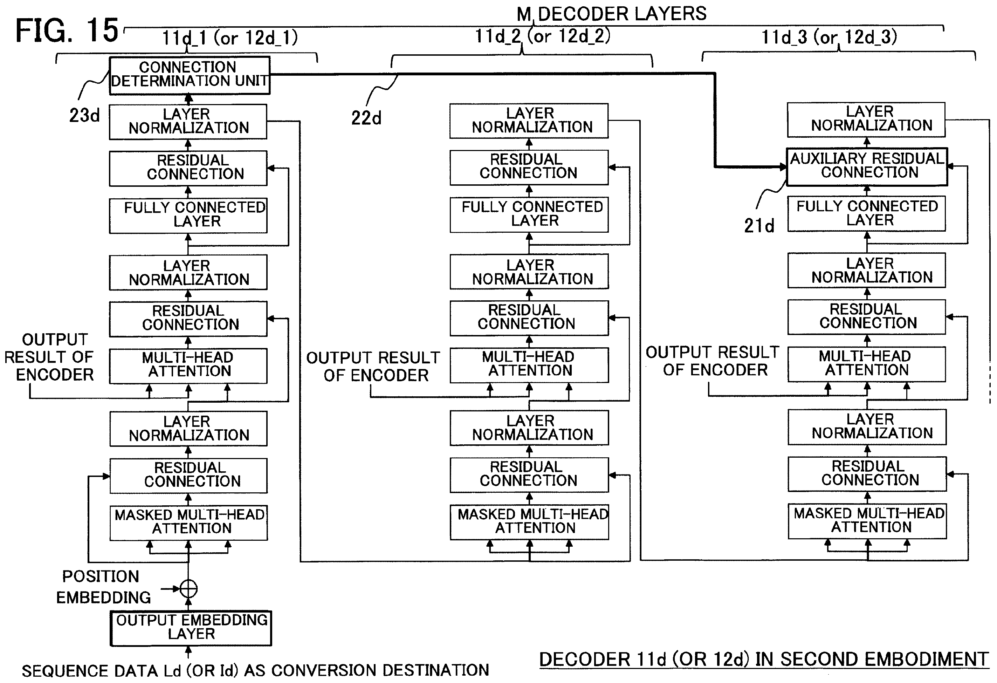

Fig. 15 is a diagram showing the configuration of the decoder 11d or 12d of the encoder-decoder model of the learning device 11 or the inference device 12 according to the second embodiment. The encoder 11e or 12e of the encoder-decoder model of the learning device 11 or the inference device 12 according to the second embodiment differs from that in the first embodiment in including a connection determination unit 23d.

The encoder 11e in the second embodiment includes the connection determination unit (referred to also as a "first connection determination unit") 23e that prevents the first output of the first encoder layer 11e_n from being outputted to the path 22e when the first output does not satisfy a predetermined first condition. The decoder 11d in the second embodiment includes the connection determination unit (referred to also as a "second connection determination unit") 23d that prevents the second output of the first decoder layer 11d_m from being outputted to the second path 22d when the second output does not satisfy a predetermined second condition.

In the learning of the transformer, there is a variation in a parameter update amount in each layer. Basically, when the parameter update amount at the time of the learning is small, the learning has not progressed sufficiently and an unstable state continues. In consideration of this property, the residual connection in a transformer layer where the parameter update amount is especially small is designated as the auxiliary residual connection 21e, information on the transformer layer where the parameter update amount is small is previously stored in the connection determination unit 23e, and the information on the transformer layer where the parameter update amount is small supplied from an upstream layer is provided to the auxiliary residual connection 21e only in a transformer layer where the parameter update amount is small.

The encoder 12e in the second embodiment includes the first connection determination unit 23e that prevents the first output of the first encoder layer 21e_n from being outputted to the first path (22e) when the first output does not satisfy a predetermined first condition. The decoder 12d in the second embodiment includes the second connection determination unit 23d that prevents the second output of the first decoder layer 11d_m from being outputted to the second path (22d) when the second output does not satisfy a predetermined second condition.

In the inference, the residual connection in a transformer layer where the parameter update amount is especially small is designated as the auxiliary residual connection 21d, information on the transformer layer where the parameter update amount is small is previously stored in the connection determination unit 23d, and the information on the transformer layer where the parameter update amount is small supplied from an upstream layer is provided to the auxiliary residual connection 21d only in a transformer layer where the parameter update amount is small.

As described above, according to the second embodiment, the auxiliary residual connection is applied only in layers where the parameter update amount is small, by which the learning stability can be increased without increasing the number of parameters of the encoder-decoder model and with minimum modifications.

Except for the above-described features, the second embodiment is the same as the first embodiment.

(5) Third Embodiment

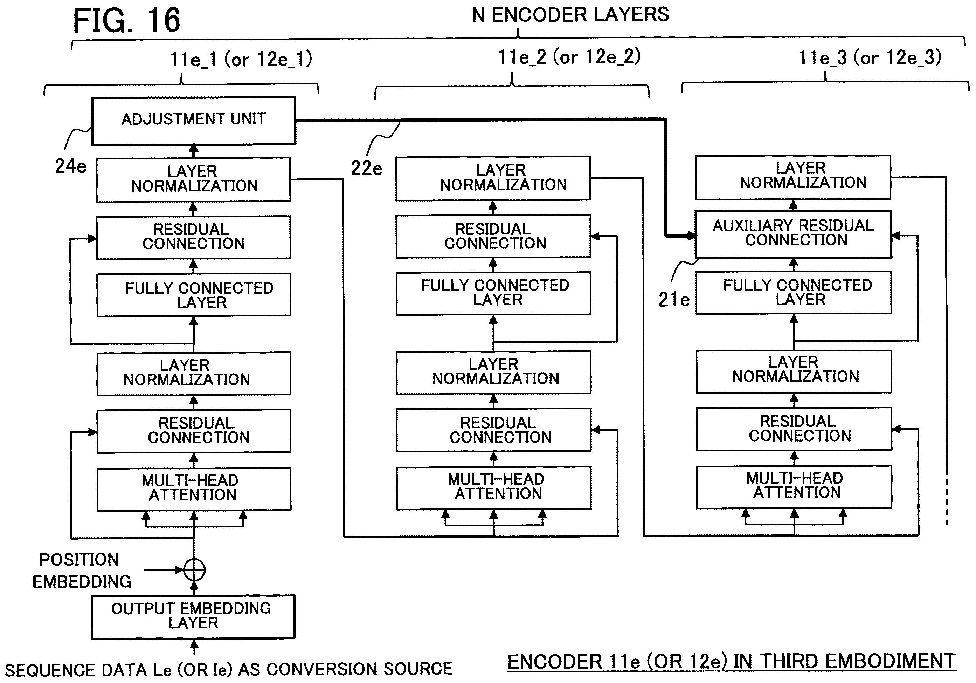

Fig. 16 is a diagram showing the configuration of the encoder 11e or 12e of the encoder-decoder model of the learning device 11 or the inference device 12 according to a third embodiment. The encoder 11e or 12e of the encoder-decoder model of the learning device 11 or the inference device 12 according to the third embodiment differs from that in the first embodiment in including an adjustment unit (referred to also as a "first adjustment unit") 24e.

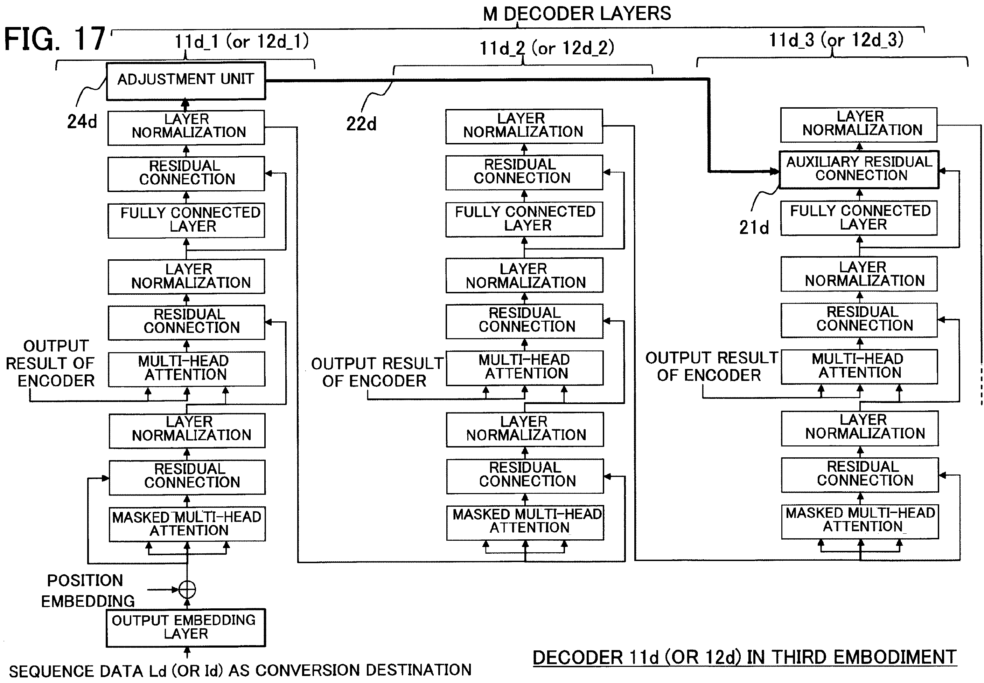

Fig. 17 is a diagram showing the configuration of the decoder 11d or 12d of the encoder-decoder model of the learning device 11 or the inference device 12 according to the third embodiment. The decoder 11d or 12d of the encoder-decoder model of the learning device 11 or the inference device 12 according to the third embodiment differs from that in the first embodiment in including an adjustment unit (referred to also as a "second adjustment unit") 24d.

The adjustment unit 24e, 24d executes a weighting process of weighting a value to be added to the auxiliary residual connection 21e, 21d. When the output of a transformer layer is connected to the auxiliary residual connection 21e, 21d of a lower transformer layer, the residual connection is made after weighting with a coefficient determined by the adjustment unit 24e, 24d. The coefficient handled by the adjustment unit 24e, 24d may be either a coefficient previously provided by a human hand or a coefficient determined by machine learning as a parameter of the neural network.

As described above, according to the third embodiment, the parameter update amount is adjusted by the adjustment unit 24e, 24d so that an optimum residual connection can be applied, and thus the learning stability can be increased without increasing the number of parameters of the encoder-decoder model.

Except for the above-described features, the third embodiment is the same as the first embodiment. Further, the adjustment unit in the third embodiment can be applied also to the second embodiment.

(6) Modification

In the above-described embodiments, a plurality of transformer layers are employed as the neural network model formed by combining a plurality of encoder layers or decoder layers each formed by a neural network including at least one attention mechanism and residual connection. Instead of the neural network model employing a plurality of transformer layers, it is possible to use a model employing BERT (Bidirectional Encoder Representations from Transformers), a model employing GPT (Generative Pre-trained Transformer), a model employing T5 (Text-to-Text Transfer Transformer), or the like. BERT is described in Non-patent Reference 2, GPT is described in Non-patent Reference 3, and T5 is described in Non-patent Reference 4.

Non-patent Reference 2: Jacob Devlin and two others, "BERT: Pre-training of Deep Bidirectional Transformers for Language Understanding", arXiv preprint arXiv:1810.04805, 2018.

Non-patent Reference 3: Alec Radford and three others, "Improving Language Understanding by Generative Pre-Training", 2018.

Non-patent Reference 4: Colin Raffel and eight others, "Exploring the Limits of Transfer Learning with a Unified Text-to-Text Transformer", The Journal of Machine Learning Research, 21(1), 5485-5551, 2020.

**DESCRIPTION OF REFERENCE CHARACTERS**

10: machine learning-inference device, 11: learning device, 12: inference device, 111: data acquisition unit, 112: model generation unit, 121: data acquisition unit, 122: inference unit, 11e: encoder, 11e_1, ..., 11e_N: encoder layer, 11e_n ($1 \leq n \leq N$ - 2): first encoder layer, 11e_n+$\alpha$ ($\alpha \geq 2$): second encoder layer, 11d: decoder, 11d_1, ..., 11d_M: decoder layer, 11d_m ($1 \leq m \leq M$ - 2): first decoder layer, 11d_n+$\beta$ ($\beta \geq 2$): second decoder layer, 12e: encoder, 12e_1, ..., 12e_N: encoder layer, 12e_n ($1 \leq n \leq N$ - 2): first encoder layer, 12e_n+$\alpha$ ($\alpha \geq 2$): second encoder layer, 12d: decoder, 12d_1, ..., 12d_M: decoder layer, 12d_m ($1 \leq m \leq M$ - 2): first decoder layer, 12d_n+$\beta$ ($\beta \geq 2$): second decoder layer, 21e: auxiliary residual connection (first auxiliary residual connection), 22e: path (first path), 21d: auxiliary residual connection (second auxiliary residual connection), 22d: path (second path), 23e: connection determination unit (first connection determination unit), 23d: connection determination unit (second connection determination unit), 24e: adjustment unit (first adjustment unit), 24d: adjustment unit (second adjustment unit), L: learning data, Le: sequence data as conversion source, Ld: sequence data as conversion destination, Ie: sequence data as conversion source, Id: sequence data as conversion destination, P: learning model.

**Claims**

1. A learning device comprising:

a data acquisition unit to acquire learning data including sequence data as a conversion source and sequence data as a conversion destination; and

a model generation unit to generate a learning model, for inferring the sequence data as the conversion destination from the sequence data as the conversion source, by using the learning data, wherein

the model generation unit includes:

an encoder including a stack of N encoder layers, where N is an integer greater than or equal to three, to which the sequence data as the conversion source is inputted; and

a decoder including a stack of M decoder layers, where M is an integer greater than or equal to three, to which the sequence data as the conversion destination and an output of the encoder are inputted,

each of the N encoder layers is formed of a neural network including an attention mechanism and a residual connection,

each of the M decoder layers is formed of a different neural network including an attention mechanism and a residual connection,

the encoder includes a first path to add a first output as an output of a first encoder layer among the N encoder layers to a first auxiliary residual connection as the residual connection of a second encoder layer that is two or more layers lower than the first encoder layer, and
the decoder includes a second path to add a second output as an output of a first decoder layer among the M decoder layers to a second auxiliary residual connection as the residual connection of a second decoder layer that is two or more layers lower than the first decoder layer.

2. The learning device according to claim 1, wherein

the encoder includes a first connection determination unit to prevent the first output of the first encoder layer from being outputted to the first path when the first output does not satisfy a predetermined first condition, and
the decoder includes a second connection determination unit to prevent the second output of the first decoder layer from being outputted to the second path when the second output does not satisfy a predetermined second condition.

3. The learning device according to claim 1, wherein

the encoder includes a first adjustment unit to perform a weighting process on the first output of the first encoder layer to be outputted to the first path, and
the decoder includes a second adjustment unit to perform the weighting process on the second output of the first decoder layer to be outputted to the second path.

4. The learning device according to any one of claims 1 to 3, wherein

the encoder is a transformer, and
the decoder is another transformer.

5. A learning method to be executed by a learning device,

the learning device including:
a data acquisition unit to acquire learning data including sequence data as a conversion source and sequence data as a conversion destination; and
a model generation unit to generate a learning model, for inferring the sequence data as the conversion destination from the sequence data as the conversion source, by using the learning data, wherein

the model generation unit includes:

an encoder including a stack of N encoder layers, where N is an integer greater than or equal to three, to which the sequence data as the conversion source is inputted; and
a decoder including a stack of M decoder layers, where M is an integer greater than or equal to three, to which the sequence data as the conversion destination and an output of the encoder are inputted,
each of the N encoder layers is formed of a neural network including an attention mechanism and a residual connection, and
each of the M decoder layers is formed of a different neural network including an attention mechanism and a residual connection,
the learning method comprising:

a step of adding, by the encoder, a first output as an output of a first encoder layer among the N encoder layers to a first auxiliary residual connection as the residual connection of a second encoder layer that is two or more layers lower than the first encoder layer; and
a step of adding, by the decoder, a second output as an output of a first decoder layer among the M decoder layers to a second auxiliary residual connection as the residual connection of a second decoder layer that is two or more layers lower than the first decoder layer.

6. A learning program that causes a computer as the learning device to execute the steps in the learning method according to claim 5.

7. An inference device comprising:

a data acquisition unit to acquire sequence data as a conversion source; and
an inference unit to output sequence data as a conversion destination based on the sequence data as the conversion source acquired from the data acquisition unit by using a learning model for inferring the sequence data as the conversion destination from the sequence data as the conversion source, wherein
the inference unit includes:

an encoder including a stack of N encoder layers, where N is an integer greater than or equal to three, to which the sequence data as the conversion source is inputted; and a decoder including a stack of M decoder layers, where M is an integer greater than or equal to three, to which the sequence data as the conversion destination and an output of the encoder are inputted, each of the N encoder layers is formed of a neural network including an attention mechanism and a residual connection, each of the M decoder layers is formed of a neural network including an attention mechanism and a residual connection, the encoder includes a first path to add a first output as an output of a first encoder layer among the N encoder layers to a first auxiliary residual connection as the residual connection of a second encoder layer that is two or more layers lower than the first encoder layer, and the decoder includes a second path to add a second output as an output of a first decoder layer among the M decoder layers to a second auxiliary residual connection as the residual connection of a second decoder layer that is two or more layers lower than the first decoder layer.

8. The inference device according to claim 7, wherein

the encoder includes a first connection determination unit to prevent the first output of the first encoder layer from being outputted to the first path when the first output does not satisfy a predetermined first condition, and the decoder includes a second connection determination unit to prevent the second output of the first decoder layer from being outputted to the second path when the second output does not satisfy a predetermined second condition.

9. The inference device according to claim 7, wherein

the encoder includes a first adjustment unit to perform a weighting process on the first output of the first encoder layer to be outputted to the first path, and the decoder includes a second adjustment unit to perform the weighting process on the second output of the first decoder layer to be outputted to the second path.

10. The inference device according to any one of claims 7 to 9, wherein

the encoder is a transformer, and the decoder is another transformer.

11. An inference method to be executed by an inference device,
the inference device including:

a data acquisition unit to acquire sequence data as a conversion source; and an inference unit to output sequence data as a conversion destination based on the sequence data as the conversion source acquired from the data acquisition unit by using a learning model for inferring the sequence data as the conversion destination from the sequence data as the conversion source, wherein the inference unit includes:

an encoder including a stack of N encoder layers, where N is an integer greater than or equal to three, to which the sequence data as the conversion source is inputted; and a decoder including a stack of M decoder layers, where M is an integer greater than or equal to three, to which the sequence data as the conversion destination and an output of the encoder are inputted, each of the N encoder layers is formed of a neural network including an attention mechanism and a residual connection, and each of the M decoder layers is formed of a neural network including an attention mechanism and a residual connection, the inference method comprising:

a step of adding, by the encoder, a first output as an output of a first encoder layer among the N encoder layers to a first auxiliary residual connection as the residual connection of a second encoder layer that is two or more layers lower than the first encoder layer; and a step of adding, by the decoder, a second output as an output of a first decoder layer among the M decoder layers to a second auxiliary residual connection as the residual connection of a second decoder layer that is two or more layers lower than the first decoder layer.

12. An inference program that causes a computer as the inference device to execute the steps in the inference method according to claim 11.

# FIG. 1

MACHINE LEARNING-INFERENCE DEVICE — 10

LEARNING DATA L

INPUT SEQUENCE DATA → INFERENCE DEVICE (12)

LEARNING DEVICE (11)

LEARNING MODEL P (PARAMETERS)

OUTPUT SEQUENCE DATA

SEQUENCE DATA Ld (OR Id) AS CONVERSION DESTINATION

EP 4 685 698 A1

## FIG. 2

LEARNING DEVICE — 11

LEARNING DATA L → DATA ACQUISITION UNIT (111) → MODEL GENERATION UNIT (112)

↕ P

MODEL STORAGE UNIT (PARAMETERS) (113)

## FIG. 3

MODEL STORAGE UNIT (PARAMETERS) — 123

INFERENCE DEVICE — 12

I → DATA ACQUISITION UNIT (121) → INFERENCE UNIT (122) → Op

P

# FIG. 4

```
        START

          │
          ▼
┌──────────────────────┐  S101
│        INPUT         │
│    LEARNING DATA     │
└──────────────────────┘
          │
          ▼
┌──────────────────────┐  S102
│   LEARN PARAMETERS OF │
│ MACHINE LEARNING MODEL │
└──────────────────────┘
          │
          ▼
┌──────────────────────┐  S103
│  OUTPUT PARAMETERS OF │
│ MACHINE LEARNING MODEL │
└──────────────────────┘
          │
          ▼
         END
```

# FIG. 5

```
        START

          │
          ▼
┌──────────────────────┐  S201
│        INPUT         │
│  INPUT SEQUENCE DATA  │
└──────────────────────┘
          │
          ▼
┌──────────────────────┐  S202
│    MAKE INFERENCE     │
│   BY USING PARAMETERS │
│ OF MACHINE LEARNING MODEL │
└──────────────────────┘
          │
          ▼
┌──────────────────────┐  S203
│ OUTPUT INFERENCE RESULT │
│ OF MACHINE LEARNING MODEL │
└──────────────────────┘
          │
          ▼
         END
```

FIG. 6

EP 4 685 698 A1

## FIG. 7

OUTPUT PROBABILITY
CORRECT ANSWER INCORRECT ANSWER SEQUENCE

MODEL GENERATION UNIT

11e

ENCODER
(TRANSFORMER
LAYER
11e_1 – 11e_N)

11d

DECODER
(TRANSFORMER
LAYER
11d_1 – 11d_M)

112

L

SEQUENCE DATA Le
AS CONVERSION SOURCE

SEQUENCE DATA Ld
AS CONVERSION DESTINATION
(SUCCESSIVELY SHIFTED RIGHTWARD)

## FIG. 8

OUTPUT PROBABILITY Op

INFERENCE UNIT

12e

ENCODER
(TRANSFORMER
LAYER
12e_1 – 12e_N)

12d

DECODER
(TRANSFORMER
LAYER
12d_1 – 12d_M)

122

I

SEQUENCE DATA Ie
AS CONVERSION SOURCE

SEQUENCE DATA Id
AS CONVERSION DESTINATION

# FIG. 9

OUTPUT PROBABILITY

## ENCODER-DECODER MODEL
## IN COMPARATIVE EXAMPLE

| SOFTMAX |

11d' (OR 12d') | LINEAR TRANSFORMATION |

DECODER

| LAYER NORMALIZATION |

| RESIDUAL CONNECTION |

| FULLY CONNECTED LAYER |

TRANSFORMER LAYER (DECODER)

11e' (OR 12e')

ENCODER

TRANSFORMER LAYER (ENCODER)

| LAYER NORMALIZATION E6 |

| RESIDUAL CONNECTION E5 |

| FULLY CONNECTED LAYER E4 |

N LAYERS

| LAYER NORMALIZATION E3 |

| RESIDUAL CONNECTION E2 |

| MULTI-HEAD ATTENTION E1 |

| LAYER NORMALIZATION D6 |

| RESIDUAL CONNECTION D5 |

| MULTI-HEAD ATTENTION D4 |

M LAYERS

| LAYER NORMALIZATION D3 |

| RESIDUAL CONNECTION D2 |

| MASKED MULTI-HEAD ATTENTION D1 |

POSITION EMBEDDING → ⊕    POSITION EMBEDDING → ⊕

| INPUT EMBEDDING LAYER |    | OUTPUT EMBEDDING LAYER |

SEQUENCE DATA Le (OR Ie) AS CONVERSION SOURCE    SEQUENCE DATA Ld (OR Id) AS CONVERSION DESTINATION

EP 4 685 698 A1

# FIG. 10

N ENCODER LAYERS

**Encoder Layer 1:**

| LAYER NORMALIZATION E6 |
| RESIDUAL CONNECTION E5 |
| FULLY CONNECTED LAYER E4 |
| LAYER NORMALIZATION E3 |
| RESIDUAL CONNECTION E2 |
| MULTI-HEAD ATTENTION E1 |

TRANSFORMER LAYER (ENCODER)

POSITION EMBEDDING →⊕

INTPUT EMBEDDING LAYER

SEQUENCE DATA Le (OR Ie) AS CONVERSION SOURCE

**Encoder Layer 2:**

| LAYER NORMALIZATION E6 |
| RESIDUAL CONNECTION E5 |
| FULLY CONNECTED LAYER E4 |
| LAYER NORMALIZATION E3 |
| RESIDUAL CONNECTION E2 |
| MULTI-HEAD ATTENTION E1 |

**Encoder Layer N:**

| LAYER NORMALIZATION E6 |
| RESIDUAL CONNECTION E5 |
| FULLY CONNECTED LAYER E4 |
| LAYER NORMALIZATION E3 |
| RESIDUAL CONNECTION E2 |
| MULTI-HEAD ATTENTION E1 |

TRANSFORMER LAYER (DECODER)

ENCODER 11e' (OR 12e') IN COMPARATIVE EXAMPLE

EP 4 685 698 A1

# FIG. 11

M DECODER LAYERS

SEQUENCE DATA Ld (OR Id) AS CONVERSION DESTINATION

DECODER 11d' (OR 12d') IN COMPARATIVE EXAMPLE

EP 4 685 698 A1

# FIG. 12

N ENCODER LAYERS

11e_1 (or 12e_1)  |  11e_2 (or 12e_2)  |  11e_3 (or 12e_3)

**11e_1 (or 12e_1):**

LAYER NORMALIZATION

RESIDUAL CONNECTION

FULLY CONNECTED LAYER

LAYER NORMALIZATION

RESIDUAL CONNECTION

MULTI-HEAD ATTENTION

**11e_2 (or 12e_2):** 22e

LAYER NORMALIZATION

RESIDUAL CONNECTION

FULLY CONNECTED LAYER

LAYER NORMALIZATION

RESIDUAL CONNECTION

MULTI-HEAD ATTENTION

**11e_3 (or 12e_3):** 21e

LAYER NORMALIZATION

AUXILIARY RESIDUAL CONNECTION

FULLY CONNECTED LAYER

LAYER NORMALIZATION

RESIDUAL CONNECTION

MULTI-HEAD ATTENTION

POSITION EMBEDDING ⊕

INPUT EMBEDDING LAYER

SEQUENCE DATA Le (OR Ie) AS CONVERSION SOURCE

ENCODER 11e (OR 12e) IN FIRST EMBODIMENT

## FIG. 13

DECODER 11d (OR 12d) IN FIRST EMBODIMENT

# FIG. 14

N ENCODER LAYERS

ENCODER 11e (OR 12e) IN SECOND EMBODIMENT

# FIG. 15

M DECODER LAYERS

11d_1 (or 12d_1)     11d_2 (or 12d_2)     11d_3 (or 12d_3)

CONNECTION DETERMINATION UNIT

23d — LAYER NORMALIZATION

RESIDUAL CONNECTION

FULLY CONNECTED LAYER

LAYER NORMALIZATION

OUTPUT RESULT OF ENCODER — RESIDUAL CONNECTION

MULTI-HEAD ATTENTION

LAYER NORMALIZATION

RESIDUAL CONNECTION

MASKED MULTI-HEAD ATTENTION

POSITION EMBEDDING ⊕

OUTPUT EMBEDDING LAYER

SEQUENCE DATA Ld (OR Id) AS CONVERSION DESTINATION

22d

LAYER NORMALIZATION

RESIDUAL CONNECTION

FULLY CONNECTED LAYER

LAYER NORMALIZATION

OUTPUT RESULT OF ENCODER — RESIDUAL CONNECTION

MULTI-HEAD ATTENTION

LAYER NORMALIZATION

RESIDUAL CONNECTION

MASKED MULTI-HEAD ATTENTION

LAYER NORMALIZATION

AUXILIARY RESIDUAL CONNECTION

21d

FULLY CONNECTED LAYER

LAYER NORMALIZATION

RESIDUAL CONNECTION

OUTPUT RESULT OF ENCODER — MULTI-HEAD ATTENTION

LAYER NORMALIZATION

RESIDUAL CONNECTION

MASKED MULTI-HEAD ATTENTION

DECODER 11d (OR 12d) IN SECOND EMBODIMENT

EP 4 685 698 A1

# FIG. 16

N ENCODER LAYERS

11e_1 (or 12e_1), 11e_2 (or 12e_2), 11e_3 (or 12e_3)

ADJUSTMENT UNIT — 24e

LAYER NORMALIZATION, AUXILIARY RESIDUAL CONNECTION — 21e, FULLY CONNECTED LAYER, LAYER NORMALIZATION, RESIDUAL CONNECTION, MULTI-HEAD ATTENTION

LAYER NORMALIZATION, RESIDUAL CONNECTION — 22e, FULLY CONNECTED LAYER, LAYER NORMALIZATION, RESIDUAL CONNECTION, MULTI-HEAD ATTENTION

LAYER NORMALIZATION, RESIDUAL CONNECTION, FULLY CONNECTED LAYER, LAYER NORMALIZATION, RESIDUAL CONNECTION, MULTI-HEAD ATTENTION

POSITION EMBEDDING

OUTPUT EMBEDDING LAYER

SEQUENCE DATA Le (OR Ie) AS CONVERSION SOURCE

ENCODER 11e (OR 12e) IN THIRD EMBODIMENT

EP 4 685 698 A1

**FIG. 17**

M DECODER LAYERS

11d_1 (or 12d_1)    11d_2 (or 12d_2)    11d_3 (or 12d_3)

**Column 1 (11d_1):**

ADJUSTMENT UNIT

24d

LAYER NORMALIZATION

RESIDUAL CONNECTION

FULLY CONNECTED LAYER

LAYER NORMALIZATION

RESIDUAL CONNECTION

OUTPUT RESULT OF ENCODER → MULTI-HEAD ATTENTION

LAYER NORMALIZATION

RESIDUAL CONNECTION

MASKED MULTI-HEAD ATTENTION

POSITION EMBEDDING ⊕

OUTPUT EMBEDDING LAYER

SEQUENCE DATA Ld (OR Id) AS CONVERSION DESTINATION

**Column 2 (11d_2):**

22d

LAYER NORMALIZATION

RESIDUAL CONNECTION

FULLY CONNECTED LAYER

LAYER NORMALIZATION

RESIDUAL CONNECTION

OUTPUT RESULT OF ENCODER → MULTI-HEAD ATTENTION

LAYER NORMALIZATION

RESIDUAL CONNECTION

MASKED MULTI-HEAD ATTENTION

**Column 3 (11d_3):**

LAYER NORMALIZATION

AUXILIARY RESIDUAL CONNECTION

21d

FULLY CONNECTED LAYER

LAYER NORMALIZATION

RESIDUAL CONNECTION

OUTPUT RESULT OF ENCODER → MULTI-HEAD ATTENTION

LAYER NORMALIZATION

RESIDUAL CONNECTION

MASKED MULTI-HEAD ATTENTION

DECODER 11d (OR 12d) IN THIRD EMBODIMENT

## INTERNATIONAL SEARCH REPORT

| International application No. |
| --- |
| **PCT/JP2023/016817** |

| A. | CLASSIFICATION OF SUBJECT MATTER |
| --- | --- |

*G06N 3/0455*(2023.01)i
FI:   G06N3/0455

According to International Patent Classification (IPC) or to both national classification and IPC

| B. | FIELDS SEARCHED |
| --- | --- |

Minimum documentation searched (classification system followed by classification symbols)

G06N3/02-3/10

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | 高瀬翔　ほか、Ｔｒａｎｓｆｏｒｍｅｒを多層にする際の勾配消失問題と解決法について, 言語処理学会第２８回年次大会 発表論文集, 07 March 2022, pp. 173-178, (TAKASE, Sho et al.), non-official translation (Regarding the vanishing gradient problem and its solution when making a multi-layered transformer. Presentation Proceedings of 28th Annual Meeting of the Language Processing Society of Japan.)<br>pp. 174-176, fig. 2 | 1, 3-7, 9-12 |
| A | | 2, 8 |
| X | TAKASE, Sho et al. On Layer Normalizations and Residual Connections in Transformers. arXiv.org [online]. 01 June 2022, pp. 1-16, [retrieved on 19 June 2023], Internet: <URL:https://arxiv.org/pdf/2206.00330v1.pdf>, <DOI: 10.48550/arXiv.2206.00330><br>pp. 3-9, fig. 2 | 1, 3-7, 9-12 |
| A | | 2, 8 |
| A | JP 2022-549670 A (DEEPMIND TECHNOLOGIES LIMITED) 28 November 2022 (2022-11-28)<br>entire text, all drawings | 1-12 |

☐ Further documents are listed in the continuation of Box C.     ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

"T"   later document published after the international filing date or priority date and not in conflict with the application but cited to understand the principle or theory underlying the invention
"X"   document of particular relevance; the claimed invention cannot be considered novel or cannot be considered to involve an inventive step when the document is taken alone
"Y"   document of particular relevance; the claimed invention cannot be considered to involve an inventive step when the document is combined with one or more other such documents, such combination being obvious to a person skilled in the art
"&"   document member of the same patent family

| Date of the actual completion of the international search | Date of mailing of the international search report |
| --- | --- |
| **20 June 2023** | **04 July 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

| International application No. |
|---|
| **PCT/JP2023/016817** |

| Patent document cited in search report | | | Publication date (day/month/year) | Patent family member(s) | | | Publication date (day/month/year) |
|---|---|---|---|---|---|---|---|
| JP | 2022-549670 | A | 28 November 2022 | US | 2022/0366218 | A1 | |
| | | | | entire text, all drawings | | | |
| | | | | WO | 2021/058270 | A1 | |
| | | | | EP | 4007975 | A1 | |
| | | | | KR | 10-2022-0045215 | A | |
| | | | | CN | 114424208 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2022018928 A

**Non-patent literature cited in the description**

- **ASHISH VASWANI**. Attention Is All You Need. *Proceedings of the NIPS*, 2017, vol. 2017, 5998-6008
- **JACOB DEVLIN**. BERT: Pre-training of Deep Bidirectional Transformers for Language Understanding. *arXiv preprint arXiv:1810.04805*, 2018
- **ALEC RADFORD**. *Improving Language Understanding by Generative Pre-Training*, 2018
- **COLIN RAFFEL**. Exploring the Limits of Transfer Learning with a Unified Text-to-Text Transformer. *The Journal of Machine Learning Research*, 2020, vol. 21 (1), 5485-5551